(19) Europäisches Patentamt
European Patent Office
Office européen des brevets

(11) **EP 2 866 014 A1**

(12) **EUROPÄISCHE PATENTANMELDUNG**

(43) Veröffentlichungstag:
**29.04.2015   Patentblatt 2015/18**

(21) Anmeldenummer: **14189033.5**

(22) Anmeldetag: **15.10.2014**

(51) Int Cl.:
**G01L 25/00** (2006.01)      **G01M 5/00** (2006.01)
**G01M 17/10** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **18.10.2013   DE 102013111526**

(71) Anmelder: **Bombardier Transportation GmbH**
**10785 Berlin (DE)**

(72) Erfinder:
• **Worbs, Steffen**
 **12439 Berlin (DE)**

• **Zander, Norbert**
 **14612 Falkensee (DE)**
• **Lücke, Fritz Marwin**
 **14772 Brandenburg an der Havel (DE)**
• **Wolf, Eckard**
 **14612 Falkensee (DE)**

(74) Vertreter: **Zimmermann & Partner**
**Patentanwälte mbB**
**Postfach 330 920**
**80069 München (DE)**

(54) **Verfahren und Vorrichtung zur Validierung einer Dehnungsmessvorrichtung für einen Radsatz eines Schienenfahrzeugs**

(57)      Es wird Verfahren zur Kalibrierung einer Dehnungsmessvorrichtung für einen Radsatz (10) vorgeschlagen, wobei die Dehnungsmessvorrichtung mindestens einen Dehnungsmessstreifens (20) umfasst, der auf der Radsatzwelle (13) des Radsatzes (10) befestigt ist und zum Erfassen einer Dehnung der Radsatzwelle (13) dient. Eine Krafteinbringungsvorrichtung wird zum Einbringen von Kräften längs einer geraden Verbindungslinie zwischen einem ersten Krafteinleitungspunkt an der ersten Radscheibe (11) und einem relativ zum ersten Krafteinleitungspunkt in Rotationsrichtung des Radsatzes (10) versetzten zweiten Krafteinleitungspunkt an der zweiten Radscheibe (12) angebracht, wobei die Krafteinbringungsvorrichtung ein Messsignal ausgibt, dass der eingebrachten Druckkraft entspricht. Das eingeleitete Torsionsmoment wird aus der eingebrachten Druckkraft ermittelt. Die Dehnung der Radsatzwelle (13) wird mittels der Dehnungsmessvorrichtung erfasst und die damit verbundene Materialspannung in der Radsatzwelle (13) ermittelt. Die Dehnungsmessvorrichtung wird unter Verwendung des ermittelten Torsionsmoments und der ermittelten Materialspannung validiert.

Fig. 1

**Beschreibung**

Technisches Gebiet

Die vorliegende Erfindung betrifft ein Verfahren sowie eine Vorrichtung zur Validierung und/oder Kalibrierung einer Dehnungsmessvorrichtung für einen Radsatz eines Schienenfahrzeugs.

Vorbekannter Stand der Technik

Im Rahmen von Beanspruchungsprüfungen an Radsatzwellen ist es erforderlich, die applizierten Messstellen, die bei der Messung Biege- und Torsionsspannungen ausgeben, auf Plausibilität zu überprüfen bzw. zu validiere, d.h. zu kalibrieren. Die Messstellen sind typischerweise Dehnungsmessstreifen, die an der Oberfläche der Radsatzwelle befestigt sind, beispielsweise durch geeignete Kleber. Wirkt während des Betriebs, oder während eines Tests, ein Torsionsmoment auf die Radsatzwelle, führt dies zu einer Verdrehung der Radsatzwelle, was sich in einer Oberflächenspannung äußert, die mittels der Dehnungsmessstreifen registriert werden kann.

Aus DE 10 2005 044 903 A1 ist eine Vorrichtung zur Belastungsprüfung einer Radsatzwelle bekannt. Die Vorrichtung umfasst eine Halteeinrichtung für die Radsatzwelle, eine Antriebseinrichtung für einen rotatorischen Antrieb der Radsatzwelle in der Halteeinrichtung, sowie eine Belastungseinrichtung für die Radsatzwelle. Die Belastungseinrichtung umfasst ein Kraftübertragungselement, das eine in der Halteeinrichtung gelagerte Radsatzwelle an einer Stelle umschließt und eine Rotation der Radsatzwelle in der Halteeinrichtung zulässt. Erste mit dem Kraftübertragungselement verbundene Krafteinleitungseinheiten üben eine vertikal zur Radsatzwelle wirkende Kraft auf die Radsatzwelle, und zweite mit dem Kraftübertragungselement verbundene Krafteinleitungseinheiten üben eine parallel zur Radsatzwelle wirkende Kraft in einem Abstand von der Radsatzwelle auf das Kraftübertragungselement aus. Dieser Aufbau ist sehr aufwendig.

Zur Validierung von Torsionsmessstellen, welche insbesondere durch Dehnungsmessstreifen gebildet werden, kommen bisher recht umständliche Verfahren zur Anwendung, die Zeit- und Vorrichtungsaufwendig sind. Jedoch ist eine Validierung erforderlich, um einen klar definierten Zusammenhang zwischen der gemessenen Dehnung an der Oberfläche der Radsatzwelle und der Torsion zu ermitteln, da im Betrieb, oder im Test, lediglich die Ausgaben der Dehnungsmessstreifen zur Verfügung stehen.

So wird beispielsweise zur Kalibrierung hinsichtlich der Torsionsbeanspruchung ein Schienenfahrzeug auf möglichst geradem und ebenem Gleis gegen einen Prellbock oder ein weiteres festgebremstes Fahrzeug mit eigenem Antrieb gedrückt. Die dabei auftretenden Torsionsmomente der Radsätze müssen für die einzelnen Torsionsmessstellen aus den Antriebs- und Motormomenten der Radsätze von der Antriebssteuerung abgeleitet werden. Dabei ist auch eine mögliche Getriebeübersetzung zu berücksichtigen.

Nachteile des Standes der Technik

Die vorbeschriebenen Verfahren sind sehr aufwendig und darüber hinaus auch unzuverlässig, da bei der Kalibrierung eine Vielzahl von Parametern berücksichtigt werden muss.

Problemstellung

Aufgabe der vorliegenden Erfindung ist es daher, ein einfaches Verfahren und einen einfachen Messaufbau anzugeben, mit dem eine Dehnungsmessvorrichtung einfach und zuverlässig validiert und ggf. kalibriert werden kann.

Erfindungsgemäße Lösung

Die obige Aufgabe wird durch ein Verfahren nach einem der Ansprüche 1 und 13 sowie durch eine Vorrichtung nach Anspruch 7 gelöst.

Gemäß einer Ausführungsform wird ein Verfahren zur Validierung und /oder Kalibrierung einer Dehnungsmessvorrichtung für einen Radsatz bereitgestellt. Der Radsatz umfasst eine Radsatzwelle mit einer ersten Radscheibe und einer zweiten Radscheibe, die starr mit der Radsatzwelle verbunden sind, wobei die Dehnungsmessvorrichtung mindestens einen Dehnungsmessstreifens umfasst, der auf der Radsatzwelle befestigt ist, beispielsweise schräg zur Achse der Radsatzwelle verläuft, und zum Erfassen einer Dehnung der Radsatzwelle dient. Das Verfahren umfasst:

Anbringen einer Krafteinbringungsvorrichtung zum Einbringen von Kräften längs einer geraden Verbindungslinie zwischen einem ersten Krafteinleitungspunkt an der ersten Radscheibe und einem relativ zum ersten Krafteinleitungspunkt in Rotationsrichtung des Radsatzes versetzten zweiten Krafteinleitungspunkt an der zweiten Radscheibe, wobei die radiale Lage des ersten und zweiten Krafteinleitungspunkt vordefiniert und/oder messtechnisch ermittelt wird;

Einbringen einer Druckkraft mittels der Krafteinbringungsvorrichtung längs der Verbindungslinie zwischen erstem und zweitem Krafteinleitungspunkt zum Einleiten eines Torsionsmoments in die Radsatzwelle, wobei die Krafteinbringungsvorrichtung ein Messsignal ausgibt, dass der eingebrachten Druckkraft entspricht;

Ermitteln des eingeleiteten Torsionsmoments aus der eingebrachten Druckkraft;

Erfassen der Dehnung der Radsatzwelle mittels der Dehnungsmessvorrichtung und Ermitteln der damit verbundenen Materialspannung in der Radsatzwelle; und

Validieren und/oder Kalibrieren der Dehnungsmessvorrichtung unter Verwendung des ermittelten Torsionsmoments und der ermittelten Materialspannung.

Gemäß der Erfindung wird ein Torsionsmoment durch Ausüben einer Druckkraft längs einer Verbindungslinie, die schräg zur Rotationsachse der Radsatzwelle verläuft, in die Radsatzwelle eingeleitet. Druckkräfte werden auch beim Einleiten eines Biegemomentes in die Radsatzwelle ausgeübt. Allerdings wird dort die Druckkraft längs einer Linie ausgeübt, die parallel zu Rotationsachse verläuft. Zum Einleiten eines Torsionsmoments wird dagegen die Druckkraft längs der schräg zur Rotationsachse verlaufenden Verbindungslinie ausgeübt. Diese Verbindungslinie verläuft vom ersten Krafteinleitungspunkt an der ersten Radscheibe zum zweiten Krafteinleitungspunkt an der zweiten Radscheibe, der relativ zum ersten Krafteinleitungspunkt in Rotationsrichtung des Radsatzes versetzt ist.

Das so eingeleitete Torsionsmoment führt zu einer Dehnung, oder auch Stauchung, an der Oberfläche der Radsatzwelle. Im Folgenden wird der Einfachheit halber durchgängig der Begriff Dehnung verwendet, auch wenn tatsächlich eine Stauchung vorliegen sollte. Diese Dehnung lässt sich mittels eines Dehnungsmessstreifens oder mehrerer Dehnungsmessstreifen messtechnisch erfassen. Damit im Betrieb eines Schienenfahrzeugs, oder bei dessen Wartung, aus der ermittelten Dehnung auf die Größe des eingeleiteten Torsionsmoments geschlossen werden kann, ist es erforderlich, einen Zusammenhang zum eingeleiteten Torsionsmoment herzustellen. Dazu dient das hier vorgestellte Validierungs- und/oder Kalibrierungsverfahren. Mit diesem kann alternativ auch verifiziert werden, ob die Kalibrierung der Dehnungsmessvorrichtung noch innerhalb vorgegebener Toleranzen ist, oder ob die mittels der Dehnungsmessvorrichtung ermittelte Dehnung plausibel ist.

Die hier beschriebene Herangehensweise beschreibt daher ein vereinfachtes Verfahren zur Validierung und/oder Kalibrierung der Torsionsmessvorrichtung. Diese Herangehensweise lässt sich auch zur Validierung und/oder Kalibrierung einer Biegemessvorrichtung nutzten, wobei ein sehr ähnlicher Messaufbau zur Anwendung kommt. Der Unterschied besteht im Wesentlich in der Richtung der eingebrachten Druckkraft.

Beispielsweise wird die Biegung einer Radsatzwelle realisiert, indem die Radscheiben im Bereich des Radrückens in definiertem Abstand zur Mittellinie (Rotationsachse) der Radsatzwelle mittels einer definierten Kraft parallel zur Mittellinie auseinander gedrückt werden. Die eingeleitete Kraft erzeugt ein Moment im Abstand zur Wellenmitte, welches zu einer Materialspannung und damit zu einer Oberflächenspannung an der Radsatzwelle führt. Die Oberflächenspannung wird mittels Dehnungsmessstreifen erfasst.

Ähnlich zur Biegung erfolgt die Ermittlung der Torsionsspannung über Dehnungsmessstreifen. Die hierzu erforderliche Krafteinleitung erfolgt jedoch um 90 Grad zur Biegung in Umfangsrichtung des Rades versetzt (tangential) ebenfalls in definiertem Abstand zur Mittellinie der Radscheibe. Die eingeleitete Kraft zum Erzeugen eines Torsionsmoments ergibt sich als Anteil der insgesamt "schräg" eingeleiteten Kraft in Tangentialrichtung. Die Biegekraft wird dagegen durch die parallel zur Rotationsachse verlaufende Komponente gebildet. Aus dem so gebildeten Kraftdreieck, bei dem die real eingeleitete Druckkraft längs der Hypotenuse des Kraftdreiecks wirkt, lassen sich dann die Kraftkomponenten, die zur Torsion und zur Biegung führen, ableiten.

Um die eingeleiteten Kraftkomponenten zu ermitteln, kann der Abstand zwischen dem ersten Krafteinleitungspunkt und dem zweiten Krafteinleitungspunkt beispielsweise mittels der Krafteinbringungsvorrichtung oder mittels eines Laserentfernungsmessgeräts gemessen werden, sofern dieser Abstand nicht vordefiniert ist. Der Abstand der Radscheiben voneinander ist genormt und daher bekannt. Dieser Abstand kann zusätzlich messtechnisch erfasst werden.

Gemäß einer Ausführungsform wird die radiale Lage der Krafteinleitungspunkte messtechnisch erfasst, da die radiale Lage die Größe des tatsächlich eingeleiteten Torsionsmoments, und auch des Biegemoments, beeinflusst.

Die Validierung und ggf. Kalibrierung kann beispielsweise durch einen Vergleich eines vorgegebenen Zusammenhangs zwischen Torsionsmoment und Materialspannung mit den messtechnisch erfassten Größen erfolgen. Es besteht ein Zusammenhang zwischen dem Torsionsmoment, der Schubspannung und dem (polaren) Widerstandsmoment (Torsionswiderstandsmoment). Das Widerstandmoment ist ein Maß dafür, welcher Widerstand die Radsatzwelle der Entstehung von Materialspannungen, hier Schubspannungen, unter Einwirkung eines Moments entgegenwirkt. Das Widerstandsmoment lässt sich aus den geometrischen Verhältnissen des Querschnitts der Radsatzwelle und dem verwendeten Material ermitteln und so ein definierter Zusammenhang herleiten.

Aus dem Vergleich zwischen dem vorgegebenen oder errechneten Zusammenhang zwischen Torsionsmoment und Materialspannung (Schubspannung) und dem messtechnisch ermittelten Größen Materialspannung und Torsionsmoment lässt sich validieren, ob die Dehnungsmessvorrichtung den erwarteten Zusammenhang in vorgegebenen Grenzen korrekt wiedergibt und damit zur Messung geeignet ist. Außerdem kann die Dehnungsmessvorrichtung dadurch einer Kalibrierung unterzogen werden. Eine derartige Kalibrierung kann beispielsweise sicher innerhalb des Bereiches erfolgen, der durch eine Maximalkraft vorgegeben ist, die mittels der Krafteinbringungsvorrichtung eingebracht werden kann. Auf den darüberhinausgehenden Bereich kann, unter Beachtung gewisser Fehlertoleranzen, die Kalibrierung extrapoliert werden.

Ein Vorteil des hier vorgestellten Verfahrens ist, dass die Krafteinleitungspunkte nicht notwendigerweise aufwendig vordefiniert werden müssen, da durch rein geometrische Überlegungen das Kraftdreieck aus dem (bekannten) Abstand der Radscheiben voneinander und dem Abstand der beiden, in Umfangsrichtung zueinander versetzten Krafteinleitungspunkte konstruiert werden kann.

Um die Lage der Krafteinleitungspunkte, insbesondere in radialer Richtung, genauer zu definieren und die Einleitung der Druckkraft in den Radsatz sicherzustellen, können gemäß einer Ausführungsform Aufnahmevorrichtungen für die Krafteinbringungsvorrichtung an einander gegenüberliegenden Innenseiten der ersten und zweiten Radscheibe angebracht werden, wobei die Aufnahmevorrichtungen jeweils mindestens ein Lager aufweisen, zwischen denen sich die Krafteinbringungsvorrichtung abstützt.

Um weiterhin die Dehnungsmessvorrichtung auch hinsichtlich der Biegung zu kalibrieren und/oder zu validieren, oder um die Kalibrierung und/oder Validierung hinsichtlich der Torsion zu verbessern, kann gemäß einer Ausführungsform die Krafteinbringungsvorrichtung zwischen Krafteinleitungspunkten, die einander längs einer weiteren Verbindungslinie parallel zur Rotationsachse der Radsatzwelle gegenüberliegen, an der ersten und zweiten Radscheibe angebracht werden, wobei die radiale Lage der Krafteinleitungspunkte vordefiniert und/oder messtechnisch ermittelt wird. Eine Druckkraft wird dann mittels der Krafteinbringungsvorrichtung längs der weiteren Verbindungslinie zwischen den gegenüberliegenden Krafteinleitungspunkten zum Einleiten eines Biegemoments in die Radsatzwelle ausgeübt, wobei die Krafteinbringungsvorrichtung ein Messsignal ausgibt, dass der eingebrachten Druckkraft entspricht. Aus der eingebrachten Druckkraft wird das eingeleitete Biegemoment abgeleitet, die Dehnung der Radsatzwelle wird mittels der Dehnungsmessvorrichtung erfasst, und die damit verbundene Materialspannung in der Radsatzwelle ermittelt. Die Dehnungsmessvorrichtung wird unter Verwendung des eingeleiteten Biegemoments und der ermittelten Materialspannung kalibriert bzw. validiert. Außerdem kann weiterhin die Dehnungsmessvorrichtung hinsichtlich des Torsionsmoments besser kalibriert bzw. validiert werden, da bei der Einleitung des Torsionsmoments auch ein Biegemoment wirkt, dessen Einfluss auf das Messergebnis der Dehnungsmessvorrichtung berücksichtigt werden kann.

Auch im Rahmen der Validierung und/oder Kalibrierung der Dehnungsmessvorrichtung bezüglich des Biegemoments kann ein Vergleich zwischen einem vorgegebenen Zusammenhang und den messtechnisch erfassten Größen erfolgen. Der vorgegebene Zusammenhang besteht bei der Biegung zwischen dem Biegemoment, der Biegespannung und dem (axialen) Widerstandsmoment (Biegewiderstandsmoment). Das Widerstandsmoment lässt sich ebenfalls aus den geometrischen Verhältnissen des Querschnitts der Radsatzwelle und dem verwendeten Material ermitteln.

Für die Validierung und/oder Kalibrierung kann die Dehnungsmessvorrichtung mindestens einen weiteren Dehnungsmessstreifen umfassen, oder auf die gleichen wie für Torsion verwendeten Dehnungsmessstreifen zurückgreifen. Typischerweise werden für die Ermittlung der Torsion und Biegung unterschiedliche Dehnungsmessstreifen verwendet.

Gemäß einer Ausführungsform werden zwei Messungen für die Kalibrierung und/oder Validierung der Dehnungsmessvorrichtung durchgeführt, wobei jeweils eine Druckkraft entlang einer Verbindungslinie zwischen zwei Krafteinleitungspunkten auf die Innenseiten der Radscheiben ausgeübt werden. Die beiden Verbindungslinien liegen bevorzugt in einer gemeinsamen Ebene, die parallel zur Mittellinie (Rotationsachse) der Radsatzwelle verläuft, sind jedoch relativ zur Mittelachse, wenn diese in die gemeinsame Ebene projiziert wird, in entgegengesetzter Richtung verkippt. Dadurch können Torsionsmomente in unterschiedliche Richtung eingebracht und die Dehnungsmessvorrichtung für alle auftretenden Torsionsmomente validiert und ggf. kalibriert werden.

Gemäß einer Ausführungsform umfasst eine Vorrichtung zum Einbringen eines Torsionsmoments in eine Radsatzwelle eines Radsatzes, welcher eine erste Radscheibe und eine zweite Radscheibe umfasst, die starr mit der Radsatzwelle verbunden sind, mindestens zwei Aufnahmevorrichtungen zum temporären Befestigen an der ersten und der zweiten Radscheibe, wobei jede Aufnahmevorrichtung Ausrichtelemente zum radialen Ausrichten der Aufnahmevorrichtung und jeweils mindestens ein Lager aufweist, sodass, wenn die Aufnahmevorrichtungen mittels ihrer jeweiligen Ausrichtelemente an der ersten bzw. zweiten Radscheibe ausgerichtet sind, die Lager jeweils den gleichen radialen Abstand von der Rotationsachse der Radsatzwelle aufweisen. Die Vorrichtung umfasst weiterhin eine Krafteinbringungsvorrichtung mit zwei gegenüberliegenden Enden zum Einleiten einer Druckkraft längs einer Verbindungslinie zwischen ihren Enden. Die Lager sind auf die Enden abgestimmt, sodass die Enden der Krafteinbringungsvorrichtung in die Lager eingreifen können. Wie weiter oben beschrieben, kann mittels der Krafteinbringungsvorrichtung eine Druckkraft auf die Radscheiben ausgeübt werden, die zu einem Torsions- und/oder Biegemoment führt. Zum sicheren Ausrichten und Einleiten der Druckkräfte werden die Aufnahmevorrichtungen lösbar mit den Radscheiben verbunden. Die Enden der Krafteinbringungsvorrichtung stützen sich dann in den Lagern der Aufnahmevorrichtungen ab, sodass die Krafteinbringungsvorrichtung sicher zwischen den Radscheiben eingeklemmt ist.

Gemäß einer Ausführungsform weist jede der zwei Aufnahmevorrichtungen einen flachen Grundkörper auf, auf dessen einer Seite, welche bei der Befestigung der Aufnahmevorrichtung der Innenseite der Radscheibe zugewandt wird, zwei Bolzen befestigt sind, welche die Ausrichtelemente bilden und beim Befestigen an der Radscheibe auf dem Spurkranz der jeweiligen Radscheibe liegen. Dies stellt eine sehr einfache, zugleich jedoch auch sichere und wirkungsvolle Möglichkeit der Ausrichtung der Aufnahmevorrichtungen an den jeweiligen Radscheiben dar. Insbesondere wird damit eine reproduzierbare Ausrichtung in radialer Richtung ermöglicht.

Zur Verifizierung der radialen Lage kann zusätzlich der Außendurchmesser des Spurkranzes messtechnisch erfasst werden. Die Aufnahmevorrichtung kann jedoch auch relativ zur Lauffläche oder anderen Profilkomponenten ausgerichtet werden.

Gemäß einer Ausführungsform ist auf der anderen Seite des Grundkörpers das jeweilige Lager ausgebildet. In dieses greifen die Enden der Krafteinbringungsvorrichtung ein.

Gemäß einer Ausführungsform können die Lager durch jeweilige Vertiefungen im Grundkörper gebildet werden.

Gemäß einer Ausführungsform umfasst die Krafteinbringungsvorrichtung einen Hydraulikzylinder und eine Kraftmessvorrichtung, mit der die von der Krafteinbringungsvorrichtung ausgeübte Kraft erfasst werden kann. Gemäß einer Ausführungsform umfasst die Krafteinbringungsvorrichtung eine Längenmessvorrichtung, mit welcher der Abstand der gegenüberliegenden Enden ermittelt werden kann. Neben der Kraftmessung ist damit gleichzeitig eine Längenmessung und ggf. eine Messung einer Längenänderung möglich. Aus der Länge lässt sich, unter Verwendung des vorbekannten Abstands der Radscheiben, das Kräftedreieck und damit die Kraftkomponenten ermitteln.

Gemäß einer Ausführungsform wird ein Verfahren zur Belastungsprüfung oder Teilbelastungsprüfung einer Radsatzwelle eines Radsatzes, der eine erste Radscheibe und eine zweite Radscheibe umfasst, die starr mit der Radsatzwelle verbunden sind, bereitgestellt, wobei auf der Radsatzwelle mindestens ein Dehnungsmessstreifens zum Erfassen einer Dehnung der Radsatzwelle befestigt ist. Das Verfahren umfasst:

Anbringen einer Krafteinbringungsvorrichtung zum Einbringen von Kräften längs einer geraden Verbindungslinie zwischen einem ersten Krafteinleitungspunkt an der ersten Radscheibe und einem relativ zum ersten Krafteinleitungspunkt in Rotationsrichtung des Radsatzes versetzten zweiten Krafteinleitungspunkt an der zweiten Radscheibe;

Einbringen einer Druckkraft mittels der Krafteinbringungsvorrichtung längs der Verbindungslinie zwischen erstem und zweitem Krafteinleitungspunkt zum Einleiten eines Torsionsmoments in die Radsatzwelle, wobei die Krafteinbringungsvorrichtung ein Messsignal ausgibt, dass der eingebrachten Druckkraft entspricht;

Ermitteln des eingeleiteten Torsionsmoments aus der eingebrachten Druckkraft; und

Erfassen der Dehnung der Radsatzwelle mittels der Dehnungsmessvorrichtung und Ermitteln der damit verbundenen Materialspannung in der Radsatzwelle.

Die oben beschriebene Vorrichtung, bzw. der oben beschriebene Messaufbau kann damit grundsätzlich auch für Teiluntersuchungen innerhalb von komplexen Belastungsuntersuchungen, oder auch für die Untersuchung von Materialermüdungen genutzt werden, um den Einfluss eines Torsionsmoments und/oder eines Biegemoments auf die Radsatzwelle zu ermitteln.

Gemäß einer Ausführungsform umfasst das Verfahren weiterhin:

Messen des Abstands zwischen dem ersten Krafteinleitungspunkt und dem zweiten Krafteinleitungspunkt mittels der Krafteinbringungsvorrichtung oder mittels eines Entfernungsmessgeräts.

Gemäß einer Ausführungsform umfasst das Verfahren weiterhin:

Anbringen der Krafteinbringungsvorrichtung zwischen Krafteinleitungspunkten, die einander längs einer weiteren Verbindungslinie parallel zur Rotationsachse der Radsatzwelle gegenüberliegen, an der ersten und zweiten Radscheibe;

Einbringen einer Druckkraft mittels der Krafteinbringungsvorrichtung längs der weiteren Verbindungslinie zwischen den gegenüberliegenden Krafteinleitungspunkten zum Einleiten eines Biegemoments in die Radsatzwelle, wobei die Krafteinbringungsvorrichtung ein Messsignal ausgibt, dass der eingebrachten Druckkraft entspricht;

Ermitteln des eingeleiteten Biegemoments aus der eingebrachten Druckkraft; und

Ermitteln der Dehnung der Radsatzwelle mittels der Dehnungsmessvorrichtung.

Die vorstehend beschriebenen Ausführungsformen können beliebig miteinander kombiniert werden.

Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu.

Gleiche Bezugszeichen bezeichnen entsprechend ähnliche Teile.

Figur 1 zeigt einen Radsatz mit auf der Radsatzwelle befestigtem Dehnungsmessstreifen gemäß einer Ausführungsform.

Figur 2 zeigt eine Messbrücke zum Erfassen der Widerstandsänderung des Dehnungsmessstreifens gemäß einer Ausführungsform.

Figur 3 zeigt eine Ansicht auf die Innenseite einer Radscheibe eines Radsatzes mit befestigter Aufnahmevorrichtung gemäß einer Ausführungsform.

Figuren 4A und 4B zeigen Darstellungen zur Veranschaulichung der eingeleiteten Kräfte.

Figur 5 zeigt eine weitere Darstellung zur Veranschaulichung der eingeleiteten Kräfte.

Figur 6 zeigt eine Darstellung zur Veranschaulichung der auf einen Radsatz wirkenden Kräfte und Momente.

Figur 7 zeigt eine Dehnungsmessvorrichtung gemäß einer Ausführungsform.

Figur 8 zeigt eine Krafteinbringungsvorrichtung gemäß einer Ausführungsform.

Ausführungsbeispiele

Eine Radsatzwelle erfährt im Betrieb ein Torsionsmoment, welches beispielsweise durch Antriebs- oder Bremskräfte über das Getriebe aufgebaut wird. Das Getriebe sitzt hierbei auf der Radsatzwelle zwischen den Rädern oder Radscheiben. Die Räder stehen auf den Radaufstandspunkten der Schiene. Wird durch den Antrieb über das Getriebe ein Drehmoment erzeugt, wird dieses über die Radsatzwelle auf die Radscheiben übertragen und als Antriebskraft in Fahrtrichtung in die Schiene eingeleitet. Die Radsatzwelle wird zwischen Getrieberitzel und Radscheiben beidseitig tordiert. Die Torsion in der Welle führt zu einer Verdrehung derselben. Dabei ändert sich die Materialspannung in der Welle. Diese Spannungsänderung ist als Dehnung auf der Oberfläche der Welle mittels Dehnungsmessstreifen (DMS) messbar.

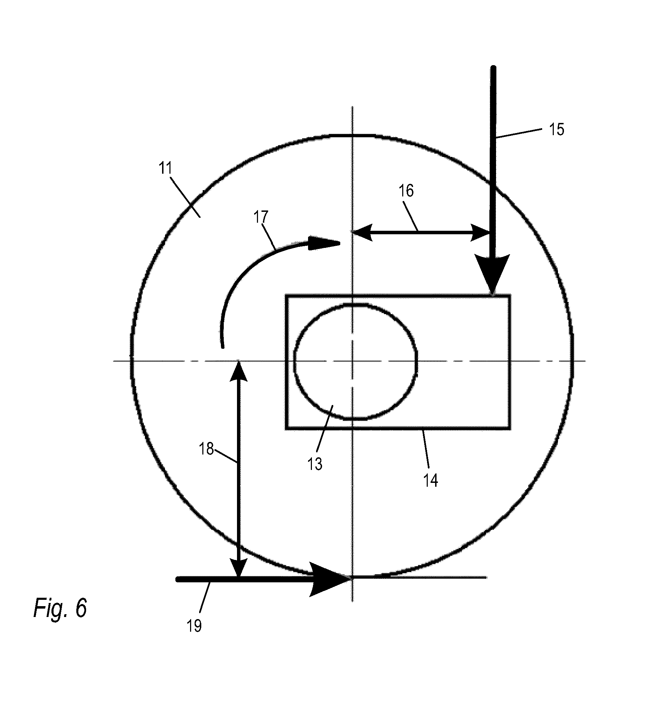

Die an einer Radsatzwelle und den Radscheiben angreifenden Kräfte und Momente sind beispielhaft in Figur 6 gezeigt. Dabei bezeichnet 11 eine Radscheibe, 13 eine Radsatzwelle, 14 ein Getriebe, 15 die Getriebabstützkraft, 16 der Getriebestützhebel, 17 das Torsionsmoment, 18 der Raddurchmesserhebel, und 19 die Antriebskraft.

Um aus der Dehnung das eingeleitete Torsionsmoment abzuleiten, muss ein mathematischer Zusammenhang zwischen der erkennbaren Dehnung und dem Torsionsmoment hergestellt werden. Der hier beschriebene Ansatz zeigt eine einfache Möglichkeit auf, wie ein definiertes Torsionsmoment erzeugt und in Relation zur erfassten Dehnung gebracht wird.

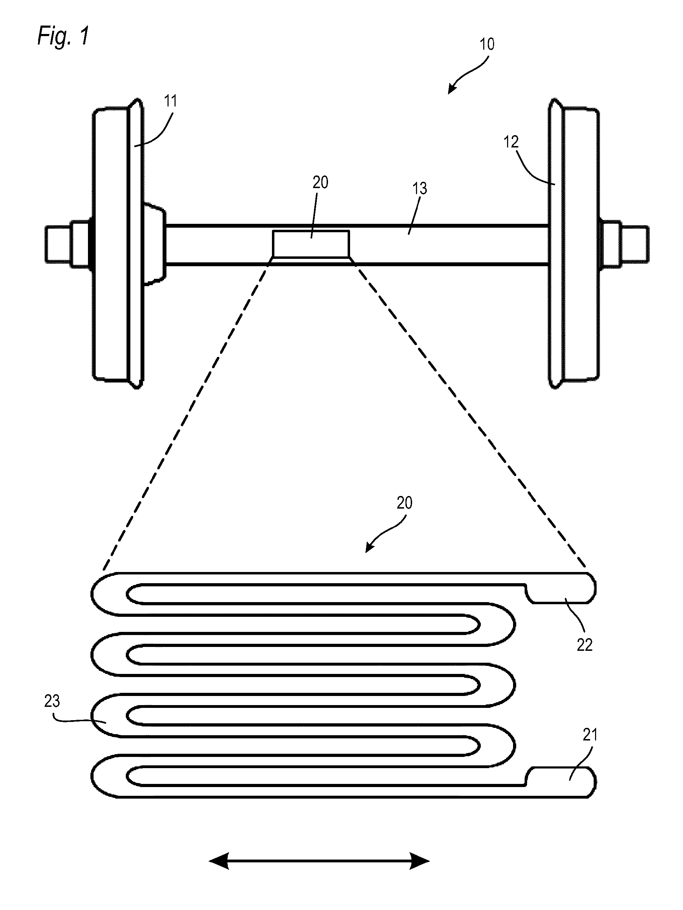

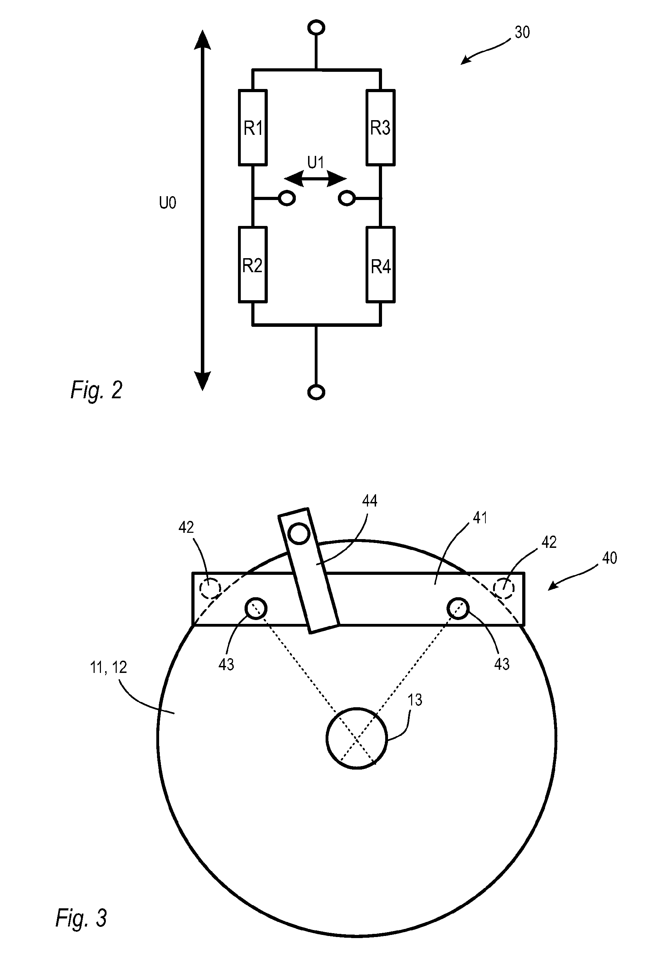

Figur 1 zeigt einen Radsatz 10 mit auf der Radsatzwelle 13 befestigtem Dehnungsmessstreifen 20. Bei diesem Dehnungsmessstreifen 20 kann es sich beispielsweise um einen Folienmessstreifen auf Basis eines in Windungen gelegten Widerstandsdrahts oder um einen Folienmessstreifen auf Basis eines Halbleitermaterials handeln. In der vergrößerten Ansicht in Figur 1 ist beispielhaft ein Folienmessstreifen 20 mit einem Widerstandsdraht 23 gezeigt, der schlaufenförmig verläuft. Typischerweise ist der Widerstandsdraht 23 auf einen dünnen Kunststoffträger, beispielsweise eine Folie, kaschiert. Über Anschlüsse 21, 22 kann der Widerstandsdraht 23 an eine Messvorrichtung, beispielsweise eine Wheatestonsche Brücke, angeschlossen werden. Ein Beispiel einer solchen Wheatestonschen Brücke 30 ist in Figur 2 dargestellt. Der Widerstand R1 kann beispielsweise der Widerstandsdraht 23 des Dehnungsmessstreifens 20 sein. Die anderen Widerstände R2, R3, R4 können Festwiderstände sein. Die Verstimmung der Spannungsteilerpaare, gebildet aus R1 und R2 bzw. R3 und R4, ist als Spannung U1 abgreifbar. U0 ist die angelegte Spannung. Die relative Widerstandsänderung eines Dehnungsmessstreifens ist proportional der relativen Längenänderung multipliziert mit dem sogenannten k-Faktor, der einen für jeden Dehnungsmessstreifen typischen und bekannten Faktor darstellt. Aus der Widerstandsänderung lässt sich damit auf die Längenänderung und damit die Oberflächenspannung schließen.

Weiterhin ist es möglich, dass der Widerstand R2 ebenfalls ein Widerstandsdraht eines weiteren Dehnungsmessstreifens ist. Beispielsweise können insbesondere für Dehnungsmessvorrichtungen, welche zur Torsionserfassung verwendet werden, zwei gekreuzte Dehnungsmessstreifen 20 verwendet werden. Da ein Dehnungsmessstreifen nur in einer Richtung, in Figur 1 mit dem Doppelpfeil angedeutet, empfindlich ist, bedarf es für die Erfassung einer beliebigen Dehnung in einer Ebene zweier Dehnungsmessstreifen, die beispielsweise unter 90° zueinander stehen. Beispielsweise kann eine sogenannte DMS-Rosette verwendet werden. Dabei handelt es sich um eine Anordnung von zwei oder mehreren nahe beieinanderliegenden Dehnungsmessstreifen unterschiedlicher Ausrichtung. Beispiele sind sogenannte "Delta-Rosetten" und "Rechtwinkel-Rosetten". Im vorliegenden Fall soll der Einfachheit halber lediglich von zwei gekreuzten Dehnungsmessstreifen 20 ausgegangen werden, die zusammen einen Dehnungsmesssensor bilden. Dieser ist beispielsweise auf der Oberfläche der Radsatzwelle 13 festgeklebt oder anderweitig dauerhaft befestigt, sodass sich eine Dehnung (oder auch Stauchung) der Oberfläche der Radsatzwelle 13 messtechnisch als Widerstandsänderung erfassen lässt.

Die beiden Dehnungsmessstreifen können entsprechende Widerstände in der Brückenschaltung bilden, oder Teil separater Brückenschaltungen sein. Weiterhin ist es möglich, dass zusätzliche Dehnungsmessstreifen an der Radsatzwelle angeordnet und in die Brückenschaltung integriert sind, beispielsweise zur Temperaturkompensation oder zur Erfassung von Dehnungen, die durch Biegemomenten verursacht werden.

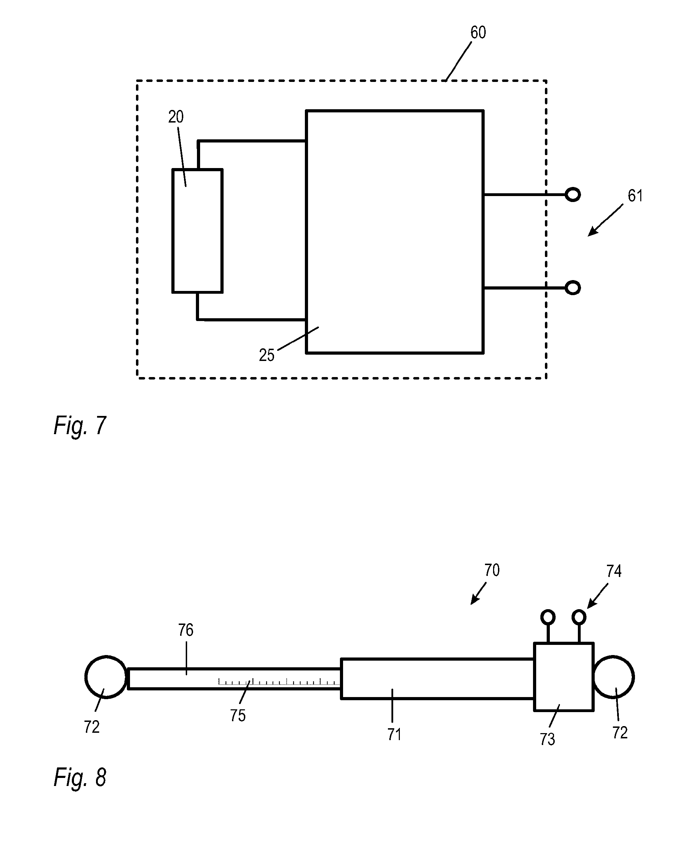

Zur Einleitung eines Torsionsmoments wird eine Krafteinbringungsvorrichtung verwendet, die so ausgelegt ist, dass sie eine Druckkraft entlang einer Verbindungslinie zwischen ihren beiden Enden aufbauen kann. Ein Beispiel einer Krafteinbringungsvorrichtung 70 ist in Figur 8 gezeigt. Die Krafteinbringungsvorrichtung 70 umfasst einen Hydraulikzylinder 71, mit dem die beiden Enden 72 auseinandergedrückt werden können. Dazu kann ein Ende 72 mit dem festen Ende des Hydraulikzylinders 71 und ein anderes Ende 72 mit dem Kolben 76 verbunden sein. Weiterhin kann die Krafteinbringungsvorrichtung 70 eine Längenmessvorrichtung 75 umfassen, die hier der Einfachheit halber als Lineal angedeutet ist. Der Abstand der beiden Enden 72 kann jedoch auch anderweitig messtechnisch erfasst und als geeignetes Messsignal abgreifbar sein.

Die beiden Enden 72 können beispielsweise kugelförmig oder spitz sein und, mit einem weiter unten beschriebenen Gegenlager, ein sphärisches Gelenk bilden.

Die Krafteinbringungsvorrichtung 70 kann weiterhin eine Kraftmessvorrichtung 73, beispielsweise in Form einer Kraftmessdose, aufweisen. Das von dieser Kraftmessvorrichtung 73 abgegebene Messsignal, dass der ausgeübten Druckkraft entspricht, kann an Anschlüssen 74 abgegriffen werden.

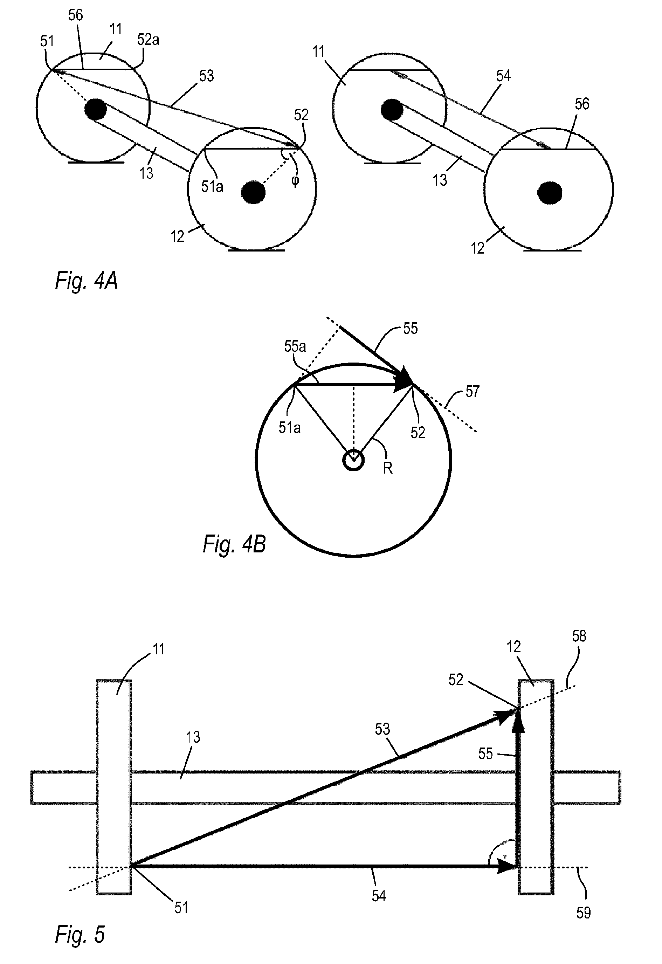

Die Krafteinbringungsvorrichtung 70 wird entlang einer Verbindungslinie, die schräg (windschief) zur Mittellinie der Radsatzwelle 13 verläuft, zwischen die Innenseiten der Radscheiben 11 und 12 gespannt. Die Verbindungslinie, beispielsweise als Linie 58 in Figur 5 dargestellt, verläuft durch einen ersten Krafteinleitungspunkt 51 an der Innenseite der ersten Radscheibe 11 und einen zweiten Krafteinleitungspunkt 52 an der Innenseite der zweiten Radscheibe 12. Zur Vereinfachung der Auswertung ist es bevorzugt, wenn die Verbindungslinie 58 in einer Ebene verläuft, die parallel zur Mittellinie der Radsatzwelle 13 verläuft. Um dies sicherzustellen, können Aufnahmevorrichtungen verwendet werden, die weiter unten beschrieben werden.

Figur 5 zeigt das so entstandene Kräftedreieck. Mit 53 ist die durch die Krafteinbringungsvorrichtung 70 eingebrachte Druckkraft dargestellt. 54 bezeichnet die Kraftkomponente entlang einer Verbindungslinie 59 parallel zur Mittelinie der Radsatzwelle 13, die zu einem Biegemoment führt. Dagegen ist mit 55 die Kraftkomponente bezeichnet, welche zu einer Querkraft und damit zu einem Torsionsmoment führt. Es soll an dieser Stelle darauf hingewiesen werden, dass sich dieses Kräftedreieck unabhängig davon einstellt, wo sich der erste und der zweite Krafteinleitungspunkt 51, 52 befindet. Wesentlich ist nur, dass die beiden Krafteinleitungspunkte 51, 52 in Drehrichtung zueinander versetzt sind.

Aus den geometrischen Verhältnissen lassen sich die Kraftkomponenten 54 ("Biegekraft") und 55 ("Querkraft") ableiten. Der Abstand der beiden Radscheiben 11, 12 ist bei einem Radsatz bekannt, da es hierzu Normen gibt. Ggf. kann der Abstand gemessen werden.

Dieser Abstand definiert die Länge der einen Kathete, hier der längeren der beiden Katheten. Aus dem Abstand der beiden Krafteinleitungspunkte 51, 52, der sich beispielsweise messtechnisch mittels der Krafteinbringungsvorrichtung 70 oder durch andere Messeinrichtungen, beispielsweise Laserentfernungsmessgeräte, bestimmen lässt, ergibt sich die Länge der Hypotenuse. Da es sich bei dem Kräftedreieck um ein rechtwinkliges Dreieck handelt, ist dieses durch die Angabe der beiden Längen ausreichend bestimmt.

Ein Vorteil dieser Herangehensweise ist, dass der "Auftreffpunkt" der Verbindungslinie 59 auf der gegenüberliegenden Radscheibe 12 unbekannt bleiben kann und messtechnisch nicht ermittelt werden muss. Die Länge der Kathete, welche durch die Kraftkomponente 55 dargestellt ist, lässt sich so rein rechnerisch ermitteln.

In Figuren 4A und 4B ist die Ebene erkennbar, in welcher die von der Krafteinbringungsvorrichtung 70 ausgeübte Druckkraft 53 wirkt. Die Ebene verläuft durch die Krafteinleitungspunkte 51, 52 und ist parallel zur Mittellinie der Radsatzwelle 13. Die Lage dieser Ebene ist durch die Linien 56 angedeutet. Wie insbesondere in Figur 4B erkennbar, wirkt die Querkraft 55a nicht ausschließlich tangential, sondern hat auch eine Komponente in radialer Richtung, da die Ebene, in welcher die Druckkraft 53 wirkt, nicht tangential verläuft, sondern mit dem Radius der Radscheiben 11, 12 einen Winkel φ kleiner 90° bildet. Bei Kenntnis des radialen Abstands der Krafteinleitungspunkte 51, 52 von der Mittellinie der Radsatzwelle 13 kann jedoch der rein tangentiale Anteil 55 (Torsionskraft 55) der Querkraft 55a bestimmt werden. Hierzu sind wiederum nur geometrische Überlegungen notwendig, wie in Figur 4B angedeutet. Dort ist mit R der radiale Abstand der Krafteinleitungspunkte 51a, 52 und mit 57 die Tangentialebene mit der in dieser Ebene liegenden Torsionskraft 55 gezeigt. Der radiale Abstand R wird vorzugsweise messtechnisch verifiziert. Er kann auch durch geeignete Maßnahmen, beispielsweise die weiter unten beschriebenen Aufnahmevorrichtungen, vorgegeben werden.

Zur eigentlichen Messung ist es sinnvoll, die Radsatzwelle 13 frei drehbar zu lagern, damit keine Verfälschung der Messung auftritt. Dazu kann der Radsatz 10 entsprechend gelagert werden, beispielsweise indem der Radsatz an seinen Achsschenkel angehoben wird.

Wird nun eine Druckkraft 53 ausgeübt, ist am Dehnungsmessstreifen 20, oder dem Dehnungsmesssensor, eine Dehnung als Änderung des Widerstandswerts abgreifbar. Da die die Torsion effektiv herbeiführende Kraftkomponente aus den obigen geometrischen Überlegungen aus der Druckkraft 53 ableitbar ist, kann ein Zusammenhang zwischen eingeleitetem Torsionsmoment und der Dehnung hergestellt werden, und so die Dehnungsmessvorrichtung insgesamt kalibriert oder validiert werden. Auch lässt sich so prüfen, ob die Dehnungsmessvorrichtung fehlerfrei arbeitet.

Zur Validierung und/oder Kalibrierung kann zunächst ein aus theoretischen Überlegungen abgeleiteter Zusammenhang zwischen dem eingebrachten Moment (Torsions-oder Biegemoment) und der dadurch bewirkten Spannung (Schub- oder Biegespannung) ermittelt werden. Bekanntlich sind die Spannung $\sigma_i$, das eingebrachte Moment $M_B$ und das Widerstandsmoment $W_B$ wie folgt miteinander verknüpft:

$$\sigma_B = M_B/W_B,$$

wobei hier der Index "B" für Biegung steht. Für die Torsion gilt eine vergleichbare Beziehung, wobei die Torsionsspannung hier mit $\tau$ bezeichnet wird und der Index "T" für Torsion steht:

$$\tau_T = M_T/W_T.$$

Der obige Zusammenhang wird getrennt für die Biegung und Torsion ermittelt, in dem beispielsweise die an sich bekannten geometrischen Verhältnisse der Radsatzwelle und die verwendeten Materialen herangezogen werden. Aus der Spannung wird dann die zu erwartende Dehnung an der Oberfläche der Radsatzwelle ermittelt. Mittels der oben beschriebenen Messung wird dann verifiziert, ob der so ermittelten Zusammenhang mit den realen Messungen innerhalb eines vorgegebenen Rahmens übereinstimmt. Ggf. kann eine Kalibrierung oder Nachkalibrierung auf Basis der Messungen erfolgen.

Typischerweise wird eine Vielzahl von Wertepaaren Torsion/Dehnung aufgenommen, und daraus eine Kalibrierkurve abgeleitet. Diese kann in der Dehnungsmessvorrichtung oder einer zentralen Auswerteinheit dauerhaft abgespeichert werden.

In einer Weiterbildung wird die Krafteinbringungsvorrichtung 70 zwischen zwei anderen Krafteinleitungspunkten 51a, 52a eingespannt, um ein entgegengesetztes Torsionsmoment einzuleiten. Die Lage der Krafteinleitungspunkte 51a, 52a ist in Figur 4A, linke Abbildung gezeigt. Beispielsweise können die Krafteinleitungspunkte 51a, 52a in der gleichen Ebene wir die Krafteinleitungspunkte 51, 52a liegen. Dies kann beispielsweise durch die weiter unten beschriebenen Aufnahmevorrichtungen sichergestellt werden.

Durch die nacheinander eingebrachten entgegengesetzten Torsionsmomente lässt sich die Dehnungsmessvorrichtung besser validieren oder kalibrieren und eventuelle Unbestimmtheiten vermeiden.

Zur weiteren Verbesserung der Validierung oder Kalibrierung der Dehnungsmessvorrichtung hinsichtlich der Torsion kann zusätzlich eine Dehnungsmesskurve (oder Stauchung) aufgenommen werden, die ausschließlich durch eine Biegung der Radsatzwelle 13 verursacht wird. Beim Ausüben der Druckkraft 53 wird auch ein Biegemoment durch die Kraftkomponente 54 erzeugt, welches den Zusammenhang zwischen eingeleitetem Torsionsmoment und ermittelter Dehnung verfälschen kann. Durch eine "reine" Biegungsmessung, wie in der rechten Abbildung in Figur 4A gezeigt, lässt sich dieser Einfluss berücksichtigen.

Um die Validierung oder Kalibrierung einfacher und zuverlässiger zu gestalten, können Aufnahmevorrichtungen 40 vorgesehen werden, wie beispielsweise in Figur 3 dargestellt. Die Aufnahmevorrichtungen 40 haben insbesondere die Funktion, die radiale Lage der Krafteinleitungspunkte 51, 52 reproduzierbar zu definieren und eine sichere Krafteinleitung von der Krafteinbringungsvorrichtung 70 in den Radsatz 10 zu gewährleisten.

Jede Aufnahmevorrichtung 40 kann beispielsweise einen Grundkörper 41 aufweisen, beispielsweise in Form eines flachen Metallstreifens ausreichender Materialstärke. An der hier als Rückseite bezeichneten Seite des Grundkörpers 41, die der Innenseite der Radscheibe 11, 12 zugewandt ist, sind Bolzen 42 angebracht, welche Ausrichtelemente zum radialen Ausrichten der Aufnahmevorrichtung 40 bilden. Diese Bolzen kommen auf dem Spurkranz der Radscheiben 11, 12 zu liegen. In einer Ebene parallel zu der Ebene, welche von den Mittellinien der Bolzen 42 definiert wird, sind Ausnehmungen oder Vertiefungen 43 auf der hier als Innenseite bezeichneten Seite des Grundkörpers 41 angeordnet. Diese Vertiefungen 43 stellen Lager für die Enden 72 der Krafteinbringungsvorrichtung 70 dar und bilden mit diesen sphärische Gelenke. Die Lager 43 definieren somit einen vordefinierten radialen Abstand und stellen gleichzeitig sicher, dass die Druckkraft zuverlässig eingeleitet werden kann.

Da der Außenradius des Spurkranzes durch beispielsweise Profilnachschleifen der Radscheiben im Lauf der Zeit kleiner werden kann, wird typischerweise der Außendurchmesser des Spurkranzes gemessen, um damit eine Referenz für die radiale Lage der Vertiefungen 43 und damit der Krafteinleitungspunkt zu haben. Die radiale Lage der Krafteinleitungspunkte, d.h. deren Abstand von der Mittelachse der Radsatzwelle 13, kann zusätzlich oder alternativ auch durch andere Mittel bestimmt und gemessen werden.

Um ein Verrutschen der Aufnahmevorrichtung 40 zu vermeiden, wird diese temporär an der jeweiligen Radscheibe 11, 12 fixiert, beispielsweise mittels einer Klemme oder Zwinge 44.

Wenn nun auf jeder Radscheibe 11, 12 jeweils eine Aufnahmevorrichtung aufgelegt und befestigt ist, so befinden sich sämtliche durch die Lager 43 definierten Krafteinleitungspunkte in gleichem radialen Abstand von der Mittellinie der Radsatzwelle. Dieser Abstand geht auch in die Berechnung des eingeleiteten Torsionsmoments ein.

Allerdings müssen die beiden Aufnahmevorrichtungen 40 nicht notwendiger so angebracht werden, dass alle Lager 43 in einer gemeinsamen Ebene liegen.

Für die Ermittlung des Torsionsmoments ist dies unerheblich, da hier neben dem Abstand der Radscheiben nur noch der Abstand der beiden Krafteinleitungspunkte, zwischen denen die Druckkraft wirkt, von Interesse ist. Selbst wenn nachfolgend ein entgegengesetztes Torsionsmoment eingeleitet werden soll und die Krafteinbringungseinrichtung deswegen von beispielsweise den Krafteinleitungspunkten 51, 52 auf die Krafteinleitungspunkte 51a, 52a umgesetzt wird (siehe linke Abbildung in Figur 4A), kann aus der Ermittlung des Abstandes der Krafteinleitungspunkte 51a, 52a auf das eingeleitete Torsionsmoment geschlossen werden.

Es ist jedoch von Vorteil, wenn die Aufnahmevorrichtungen 40 so ausgerichtet werden, dass alle Lager 43 in einer Ebene liegen. Dadurch werden symmetrische Verhältnisse für beide Torsionsmessungen hergestellt. Außerdem kann leicht auch eine Messung der reinen Biegung durchgeführt werden, welche dann beispielsweise zwischen den Krafteinleitungspunkten 51 und 51a (siehe linke Abbildung in Figur 4) erfolgt.

Ggf. muss die Dicke der Aufnahmevorrichtungen 40 bei der Ermittlung des Abstands der Krafteinleitungspunkte berücksichtigt werden.

Die gewonnen Kalibrierungskurven können in einer Auswerteeinheit 25 der Dehnungsmessvorrichtung 60 (siehe Figur 7) gespeichert werden. Die Dehnungsmessvorrichtung 60 umfasst hier den mindestens einen Dehnungsmessstreifen 20 und eine Auswerteeinheit 25, die auch lediglich nur eine Brückenschaltung umfassen kann. Über Anschlüsse 61 kann entweder ein vorverarbeitetes Messsignal, beispielsweise eine von der Brückenschaltung gelieferte Spannung, die proportional zur Widerstandsänderung ist, oder ein weiter aufbereitetes Signal abgegeben werden.

Das von der Kraftmessvorrichtung 73 der Krafteinbringungsvorrichtung 70 an dem Ausgang 74 abgegebene Messsignal kann ebenso wie das von der Dehnungsmessvorrichtung 60 ausgegebene Messsignal einer hier nicht dargestellten zentralen Auswertevorrichtung zugeführt werden. Diese Auswertevorrichtung kann auch die Abspeicherung der Kalibrierkurve übernehmen.

Mit dem hier vorgestellten Messaufbau kann sowohl eine Dehnungsmessvorrichtung, oder auch nur ein Dehnungsmessstreifen, validiert und kalibriert werden. Auch ist es möglich, eine Radsatzwelle einer Belastungsprüfung zu unterziehen.

Vorgeschlagen wird daher auch eine Vorrichtung zur Einleitung eines definierten Torsionsmomentes in einen Radsatz, bei dem sich zwischen rechter und linker Radscheibe eine stabförmige Vorrichtung befindet, die auf ihrer Mittelachse einen Druckkrafterzeuger, einen knickfesten Stab und/oder eine Kraftmessdose sowie an den Enden jeweils ein sphärisches Gelenk aufweist. Diese bilden zusammen die oben beschriebene Krafteinleitungsvorrichtung 70 und die Aufnahmevorrichtungen 40. Diese Einrichtung befindet sich zwischen den gegenüberliegenden Innenflächen von rechter und linker Radscheibe, mit einem Abstand zur Mittellinie aber nicht parallel zur Mittellinie (Rotationsachse) der Radsatzwelle.

Insgesamt ist der hier beschrieben Aufbau kostengünstig, zuverlässig, und erlaubt auch einen mobilen Einsatz.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die nachfolgenden Ansprüche stellen einen ersten, nicht bindenden Versuch dar, die Erfindung allgemein zu definieren.

**Bezugszeichenliste**

| | |
|---|---|
| 10 | Radsatz |
| 11 | erste Radscheibe |
| 12 | zweite Radscheibe |
| 13 | Radsatzwelle |
| 14 | Getriebe |
| 15 | die Getriebabstützkraft |
| 16 | Getriebestützhebel |
| 17 | Torsionsmoment |
| 18 | Raddurchmesserhebel |
| 19 | die Antriebskraft |
| 20 | Dehnungsmessstreifen |
| 21, 22 | Anschlüsse des Dehnungsmessstreifens |
| 23 | Widerstandsdraht |
| 25 | Auswerteeinheit |
| 30 | Brückenschaltung |
| 40 | Aufnahmevorrichtung |
| 41 | Grundkörper der Aufnahmevorrichtung |
| 42 | Ausrichtelement / Bolzen |
| 43 | Lager |
| 44 | Befestigungselement/Zwinge |
| 51 | erster Krafteinleitungspunkt |
| 51a | gegenüberliegender erster Krafteinleitungspunkt |
| 52 | zweiter Krafteinleitungspunkt |
| 52a | gegenüberliegender zweiter Krafteinleitungspunkt |
| 53 | eingebrachte Kraft |
| 54 | Biegekraft |
| 55a | Querkraft |
| 55 | resultierende Torsionskraft |
| 56 | Ebene |
| 57 | Tangentialebene |
| 58 | Verbindungslinie (Torsion) |
| 59 | weitere Verbindungslinie (Biegung) |
| 60 | Dehnungsmessvorrichtung |
| 61 | Anschlüsse der Dehnungsmessvorrichtung |
| 70 | Krafteinbringungsvorrichtung |
| 71 | Hydraulikzylinder |
| 72 | Enden / sphärisches Gelenk |
| 73 | Kraftmessvorrichtung / Kraftmessdose |
| 74 | Anschlüsse der Kraftmessvorrichtung |

75        Längenmessvorrichtung
76        Kolben
R         radialer Abstand

**Patentansprüche**

1. Verfahren zur Validierung und/oder Kalibrierung einer Dehnungsmessvorrichtung (60) für einen Radsatz (10), welcher eine Radsatzwelle (13) mit einer ersten Radscheibe (11) und einer zweiten Radscheibe (12) umfasst, die starr mit der Radsatzwelle (13) verbunden sind, wobei die Dehnungsmessvorrichtung (60) mindestens einen Dehnungsmessstreifen (20), bevorzugt mindesten zwei gegeneinander verdrehte Dehnungsmessstreifen, umfasst, der auf der Radsatzwelle (13) befestigt ist und zum Erfassen einer Dehnung der Radsatzwelle (13) dient, umfassend:

    - Anbringen einer Krafteinbringungsvorrichtung (70) zum Einbringen von Kräften längs einer geraden Verbindungslinie (58) zwischen einem ersten Krafteinleitungspunkt (51) an der ersten Radscheibe (11) und einem relativ zum ersten Krafteinleitungspunkt (51) in Rotationsrichtung des Radsatzes (10) versetzten zweiten Krafteinleitungspunkt (52) an der zweiten Radscheibe (12), wobei die radiale Lage des ersten und zweiten Krafteinleitungspunkt (51, 52) vordefiniert und/oder messtechnisch ermittelt wird;
    - Einbringen einer Druckkraft mittels der Krafteinbringungsvorrichtung (70) längs der Verbindungslinie (58) zwischen erstem und zweitem Krafteinleitungspunkt (51, 52) zum Einleiten eines Torsionsmoments in die Radsatzwelle (13), wobei die Krafteinbringungsvorrichtung (70) ein Messsignal ausgibt, dass der eingebrachten Druckkraft entspricht;
    - Ermitteln des eingeleiteten Torsionsmoments aus der eingebrachten Druckkraft;
    - Erfassen der Dehnung der Radsatzwelle (13) mittels der Dehnungsmessvorrichtung (60) und Ermitteln der damit verbundenen Materialspannung in der Radsatzwelle (13); und
    - Validieren und/oder Kalibrieren der Dehnungsmessvorrichtung (60) unter Verwendung des ermittelten Torsionsmoments und der ermittelten Materialspannung.

2. Verfahren nach Anspruch 1, weiterhin umfassend:

    - Vorgeben eines Zusammenhangs zwischen Torsionsmoment und durch das Torsionsmoment in der Radsatzwelle (13) erzeugten Materialspannung;
    - wobei die Validierung die Überprüfung des vorgegebenen Zusammenhangs auf Basis ermittelten Torsionsmoments und der aus der erfassten Dehnung ermittelten Materialspannung umfasst.

3. Verfahren nach Anspruch 1 oder 2, weiterhin umfassend:

    - Messen des Abstands zwischen dem ersten Krafteinleitungspunkt (51) und dem zweiten Krafteinleitungspunkt (52) mittels der Krafteinbringungsvorrichtung (70).

4. Verfahren nach Anspruch 1 oder 2, weiterhin umfassend:

    - Messen des Abstands zwischen dem ersten Krafteinleitungspunkt (51) und dem zweiten Krafteinleitungspunkt (52) mittels eines Laserentfernungsmessgeräts.

5. Verfahren nach einem der vorherigen Ansprüche, weiterhin umfassend:

    - Anbringen von Aufnahmevorrichtungen (40) für die Krafteinbringungsvorrichtung (70) an einander gegenüberliegenden Innenseiten der ersten und zweiten Radscheibe (11, 12), wobei die Aufnahmevorrichtungen (40) jeweils mindestens ein Lager (43) aufweisen, zwischen denen sich die Krafteinbringungsvorrichtung (70) abstützt.

6. Verfahren nach einem der vorherigen Ansprüche, weiterhin umfassend:

    - Anbringen der Krafteinbringungsvorrichtung (70) zwischen Krafteinleitungspunkten (51, 51a), die einander längs einer weiteren Verbindungslinie (59) parallel zur Rotationsachse der Radsatzwelle (13) gegenüberliegen, an der ersten und zweiten Radscheibe (11, 12), wobei die radiale Lage der Krafteinleitungspunkte (51, 51a) vordefiniert und/oder messtechnisch ermittelt wird;
    - Einbringen einer Druckkraft mittels der Krafteinbringungsvorrichtung (70) längs der weiteren Verbindungslinie (59) zwischen den gegenüberliegenden Krafteinleitungspunkten (51, 51a) zum Einleiten eines Biegemoments in die Radsatzwelle (13), wobei die Krafteinbringungsvorrichtung (70) ein Messsignal ausgibt, dass der eingebrachten Druckkraft entspricht;
    - Ermitteln des eingeleiteten Biegemoments aus der eingebrachten Druckkraft;
    - Erfassen der Dehnung der Radsatzwelle (13) mittels der Dehnungsmessvorrichtung (60) und Ermitteln der damit verbundenen Materialspannung in der Radsatzwelle (13); und

- Validieren der Dehnungsmessvorrichtung (60) unter Verwendung des eingeleiteten Biegemoments und der ermittelten Materialspannung.

7. Vorrichtung zum Einbringen eines Torsionsmoments in eine Radsatzwelle (13) eines Radsatzes (10), welcher eine erste Radscheibe (11) und eine zweite Radscheibe (12) umfasst, die starr mit der Radsatzwelle (13) verbunden sind, umfassend:

- mindestens zwei Aufnahmevorrichtungen (40) zum temporären Befestigen an der ersten und der zweiten Radscheibe (11, 12), wobei jede Aufnahmevorrichtung (40) Ausrichtelemente (42) zum radialen Ausrichten der Aufnahmevorrichtung (40) und jeweils mindestens ein Lager (43) aufweist, sodass, wenn die Aufnahmevorrichtungen (40) mittels ihrer jeweiligen Ausrichtelemente (42) an der ersten bzw. zweiten Radscheibe (11, 12) ausgerichtet sind, die Lager (43) jeweils den gleichen radialen Abstand von der Rotationsachse der Radsatzwelle (13) aufweisen; und
- eine Krafteinbringungsvorrichtung (70) mit zwei gegenüberliegenden Enden (72) zum Einleiten einer Druckkraft längs einer Verbindungslinie zwischen ihren Enden (72).

8. Vorrichtung nach Anspruch 7, wobei jede der zwei Aufnahmevorrichtungen (40) einen flachen Grundkörper (41) aufweist, auf dessen einer Seite, welche bei der Befestigung der Aufnahmevorrichtung an der jeweiligen Radscheibe (11, 12) der Innenseite der Radscheibe (11, 12) zugewandt wird, zwei Bolzen (42) befestigt sind, welche die Ausrichtelemente (42) bilden und beim Befestigen an der Radscheibe (11, 12) auf dem Spurkranz der jeweiligen Radscheibe (11, 12) liegen.

9. Vorrichtung nach Anspruch 8, wobei auf der anderen Seite des Grundkörpers (41) das jeweilige Lager (43) ausgebildet ist.

10. Vorrichtung nach Anspruch 9, wobei die Lager (43) durch jeweilige Vertiefungen im Grundkörper (41) gebildet werden.

11. Vorrichtung nach Anspruch nach einem der Ansprüche 7 bis 8, wobei die Krafteinbringungsvorrichtung (60) einen Hydraulikzylinder (71) und eine Kraftmessvorrichtung (73) umfasst, mit der die von der Krafteinbringungsvorrichtung (70) ausgeübte Kraft erfasst werden kann.

12. Vorrichtung nach Anspruch nach einem der Ansprüche 7 bis 11, wobei die Krafteinbringungsvorrichtung (60) eine Längenmessvorrichtung (75) umfasst, mit welcher der Abstand der gegenüberliegenden Enden (72) ermittelt werden kann.

13. Verfahren zur Belastungsprüfung einer Radsatzwelle (13) eines Radsatzes, der eine erste Radscheibe (11) und eine zweite Radscheibe (12) umfasst, die starr mit der Radsatzwelle (13) verbunden sind, wobei auf der Radsatzwelle (13) mindestens ein Dehnungsmessstreifens (20), bevorzugt mindesten zwei gegeneinander verdrehte Dehnungsmessstreifen, zum Erfassen einer Dehnung der Radsatzwelle (13) befestigt ist, umfassend:

- Anbringen einer Krafteinbringungsvorrichtung (70) zum Einbringen von Kräften längs einer geraden Verbindungslinie (58) zwischen einem ersten Krafteinleitungspunkt (51) an der ersten Radscheibe (11) und einem relativ zum ersten Krafteinleitungspunkt (51) in Rotationsrichtung des Radsatzes (10) versetzten zweiten Krafteinleitungspunkt (52) an der zweiten Radscheibe (12);
- Einbringen einer Druckkraft mittels der Krafteinbringungsvorrichtung (70) längs der Verbindungslinie (58) zwischen erstem und zweitem Krafteinleitungspunkt (51, 52) zum Einleiten eines Torsionsmoments in die Radsatzwelle (13), wobei die Krafteinbringungsvorrichtung (70) ein Messsignal ausgibt, dass der eingebrachten Druckkraft entspricht;
- Ermitteln des eingeleiteten Torsionsmoments aus der eingebrachten Druckkraft; und
- Erfassen der Dehnung der Radsatzwelle (13) mittels der Dehnungsmessvorrichtung (60) und Ermitteln der damit verbundenen Materialspannung in der Radsatzwelle (13).

14. Verfahren nach Anspruch 13, weiterhin umfassend:

- Messen des Abstands zwischen dem ersten Krafteinleitungspunkt (51) und dem zweiten Krafteinleitungspunkt (52) mittels der Krafteinbringungsvorrichtung (70) oder mittels eines Entfernungsmessgeräts.

15. Verfahren nach Anspruch 13 oder 14, weiterhin umfassend:

- Anbringen der Krafteinbringungsvorrichtung (70) zwischen Krafteinleitungspunkten (51, 51a), die einander längs einer weiteren Verbindungslinie (59) parallel zur Rotationsachse der Radsatzwelle (13) gegenüberliegen, an der ersten und zweiten Radscheibe (11, 12);
- Einbringen einer Druckkraft mittels der Krafteinbringungsvorrichtung (70) längs der weiteren Verbindungslinie (59) zwischen den gegenüberliegenden Krafteinleitungspunkten (51, 51a) zum Einleiten eines Biegemoments in die Radsatzwelle (13), wobei die Krafteinbringungsvorrichtung (70) ein Messsignal ausgibt, dass der eingebrachten Druckkraft entspricht;

- Ermitteln des eingeleiteten Biegemoments aus der eingebrachten Druckkraft; und

- Erfassen der Dehnung der Radsatzwelle (13) mittels der Dehnungsmessvorrichtung (60) und Ermitteln der damit verbundenen Materialspannung in der Radsatzwelle (13).

Fig. 1

Fig. 2

Fig. 3

Fig. 4A

Fig. 4B

Fig. 5

Fig. 6

Fig. 7

Fig. 8

**Europäisches Patentamt**

**European Patent Office**

**Office européen des brevets**

# EUROPÄISCHER RECHERCHENBERICHT

Nummer der Anmeldung

EP 14 18 9033

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KR 2005 0061147 A (KRRI [KR]) 22. Juni 2005 (2005-06-22) | 7-12 | INV. G01L25/00 G01M5/00 G01M17/10 |
| Y | * Zusammenfassung; Ansprüche 1,2,3; Abbildungen 1-4 * ----- | 6,15 | |
| Y | DE 10 2009 047364 A1 (INDUSTRIEANLAGEN BETRIEBSGES [DE]) 9. Juni 2011 (2011-06-09) | 6,15 | |
| A | * Absatz [0049] - Absatz [0074]; Ansprüche 1-4,7,10,11,14-18; Abbildungen 1-5 * ----- | 1-5,7-14 | |

**RECHERCHIERTE SACHGEBIETE (IPC)**

G01L
G01M
G01N

Der vorliegende Recherchenbericht wurde für alle Patentansprüche erstellt

| Recherchenort | Abschlußdatum der Recherche | Prüfer |
|---|---|---|
| Den Haag | 13. März 2015 | Foster, Keir |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
Dokument

EPO FORM 1503 03.82 (P04C03)

ANHANG ZUM EUROPÄISCHEN RECHERCHENBERICHT
ÜBER DIE EUROPÄISCHE PATENTANMELDUNG NR.

EP 14 18 9033

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-03-2015

| Im Recherchenbericht angeführtes Patentdokument | Datum der Veröffentlichung | Mitglied(er) der Patentfamilie | Datum der Veröffentlichung |
|---|---|---|---|
| KR 20050061147 A | 22-06-2005 | KEINE | |
| DE 102009047364 A1 | 09-06-2011 | DE 102009047364 A1 | 09-06-2011 |
| | | EP 2330399 A1 | 08-06-2011 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005044903 A1